# EUROPÄISCHE PATENTSCHRIFT

(11) **EP 1 681 182 B1**
(45) Veröffentlichungstag und Bekanntmachung des Hinweises auf die Patenterteilung: **26.05.2010**
(21) Anmeldenummer: 06000368.8
(22) Anmeldetag: 10.01.2006
(51) Int. Cl.: B60G 17/02, B60G 15/06, F16F 9/38, F16F 9/42, H02K 7/06, F16F 15/02

(54) **Federträger**
Spring support
Support de ressort

(30) Priorität: 14.01.2005 DE 102005001739
(43) Veröffentlichungstag der Anmeldung: 19.07.2006
(73) Patentinhaber: ZF Friedrichshafen AG, 88046 Friedrichshafen (DE)
(72) Erfinder: Münster, Martin, 88046 Friedrichshafen (DE); Mair, Ulrich, 88045 Friedrichshafen (DE)

(56) Entgegenhaltungen:
- DE-A1- 10 122 542
- DE-A1- 10 200 608
- DE-A1- 10 318 538
- JP-A- 10 292 840
- JP-A- 2002 013 580
- JP-U- 4 097 135
- JP-U- 4 101 043
- US-A- 4 235 426

## Beschreibung

-Die Erfindung betrifft einen Schwingungsdämpfer gemäß dem Oberbegriff von Patentanspruch 1.

Ein Federträger, der zwischen einem Fahrzeugaufbau und einer Fahrzeugachse angeordnet ist, unterliegt aufgrund des Einbauortes erheblichen Einflüssen wie Verschmutzung oder Feuchtigkeit. Deshalb wird insbesondere die Kolbenstange eines Schwingungsdämpfers als mögliche Bauform eines Federträgers mit einem Schutzrohr geschützt. Für die Kolbenstange liegt der beste Schutz dann vor, wenn ein Schutzrohr den aus dem Zylinder ragenden Abschnitt möglichst hermetisch abdeckt. Wenn man das Schutzrohr jedoch zum Zylinder und zu einem fahrzeugaufbauseitigen Bauteil abdichtet, dann entsteht bei jedem Kolbenstangenhub eine Volumenveränderung des vom Schutzrohr eingehüllten Volumens. Dieser Pumpeffekt muss von dem Schutzrohr kompensiert werden.

Die einfachste Lösung kann darin bestehen, dass man einen Faltenbalg verwendet und eine Durchmesservergrößerung des Faltenbalgs bei einfahrender Kolbenstange toleriert. Aufgrund beengter Bauräume kann es aber vorkommen, dass der Faltenbalg dann mit einem benachbarten Bauteil, z. B. einer den Schwingungsdämpfer einhüllenden Feder in Kontakt kommt.

Aus der DE 687 859 ist ein Schwingungsdämpfer mit einem Faltenbalg bekannt, der einerseits an einem oberen Kolbenstangenlager und andererseits mittels einer Kappe an einem Zylinder befestigt ist. Damit der beschriebene Pumpeffekt innerhalb des vom Faltenbalg eingeschlossenen Ringraums nicht auftreten kann, ist der Ringraum über einen Entlüftungskanal innerhalb der hohlen Kolbenstange mit der Umgebung verbunden. Diese auf den ersten Blick einfache Lösung verfügt jedoch über mindestens eine Querbohrung in der Kolbenstange, die unverhältnismäßig teuer ist. Des weiteren wird die Kolbenstange in dem höchstbelasteten Abschnitt durch den Entlüftungskanal geschwächt.

Die DE 102 00 608 A1 beschreibt einen Faltenbalg für einen Schwingungsdämpfer oder ein Federbein, der im Bereich eines oberen Federtellers eine Lufteinlass und an einem unteren Federteller einen Luftauslass aufweist. Der Lufteinlass kann über eine Leitung mit einem externen Druckerzeuger verbunden sein, um eine gezielte Luftmassenbewegung innerhalb des von dem Faltenbalg eingehüllten Ringraums zu erreichen.

Die DE 101 22 542 A1 betrifft einen Federträger, umfassend einen Schwingungsdämpfer mit einer in einem Zylinder axial beweglichen Kolbenstange. Zwischen zwei voneinander beabstandeten Federtellern ist eine Tragfeder angeordnet Ein Schutzrohrabschnitt (Blende) als Teil einer zweiteiligen teleskopierbaren Schutzrohranordnung ist mit einem der Federteller verbunden und begrenzt nach radial einen Ringraum, welcher zusätzlich endseitig abgedeckt ist. Zwischen dem Ringraum und der Umgebung der Schutzrohranordnung liegt eine Strömungsverbindung in Form eines Ringspaltes zwischen zwei Schutzrohrabschnitten zum Luftaustausch vor.

Aufgabe der vorliegenden Erfindung ist es, einen Federträger zu realisieren, der eine Belüftung des von einem Schutzrohr eingehüllten Ringraums aufweist, in dem die Zirkulation und der Luftaustausch im Vergleich zum Stand der Technik einfach ausgeführt und in seiner Wirkung verbessert ist.

Erfindungsgemäß wird die Aufgabe dadurch gelöst, dass der Federträger zur axialen Verstellung eines Federtellers für eine Tragfeder einen Aktuator aufweist, der mit dem Ringraum verbunden und in dem die mindestens eine Strömungsverbindung ausgeführt ist.

Der große Vorteil der Erfindung besteht darin, dass trotz der Umhüllung durch das Schutzrohr keine Pumpwirkung auftritt, die einerseits das Schutzrohr zusätzlich belasten oder eine ungewollte Federwirkung bewirken würde.

In weiterer vorteilhafter Ausgestaltung umfasst der Aktuator einen Stator und einen Rotor, wobei der Rotor funktional zwischen der mindestens einen Strömungsverbindung und dem Ringraum angeordnet ist und mindestens einen Lüftungsdurchlass aufweist. Der Rotor fördert mit seiner Betriebsbewegung den Luftaustausch zwischen dem Ringraum und der Umgebung.

Der Aktuator deckt das Schutzrohr endseitig ab. Bevorzugt ist der Aktuator am oberen Ende des Schutzrohrs befestigt. Folglich wird die wärme Luftmasse innerhalb des Ringraums von dem Rotor schneller abgeführt.

Der Aktuator treibt über seinen Rotor eine Gewindespindel an, die auf eine Gewindemutter eine Axialbewegung zur Positionierung eines Federtellers für eine Tragfeder ausübt, wobei die Baueinheit Gewindemutter-Federteller mit einer Belüftungsanschlussöffnung an den Ringraum ausgeführt ist. Die Belüftungsanschlussöffnung sorgt für eine bessere Durchmischung der Luft innerhalb des Ringraums.

Zusätzlich ist die Gewindemutter mit einem zweiten Schutzrohr verbunden, wobei das zweite Schutzrohr einen Ringraum begrenzt, der über eine Durchlassöffnung mit dem ersten Ringraum verbunden ist. Beide Ringräume können über die Strömungsverbindung im Aktuator mit der Umgebung verbunden sind, so dass es keine komprimierten Luftmassen innerhalb der von den Schutzrohren eingeschlossenen Räumen geben kann.

Dabei ist das zweite Schutzrohr als ein starrer Körper ausgeführt. Für das zweite Schutzrohr steht nur ein eng begrenzter Bauraum zur Verfügung, so dass ein Faltenbalg ggf. mit radial benachbarten Teilen in Kontakt kommen könnte.

Der zweite Ringraum wird von einer Dichtung zu dem zweiten Schutzrohr verschlossen. Damit wird eine optimale Abdichtung des zweiten Ringraums erreicht und die Gewindespindel besonders geschützt.

In weiterer vorteilhafter Ausgestaltung ist das erste Schutzrohr endseitig an dem verstellbaren Federteller befestigt. Das erste Schutzrohr wird von einem Faltenbalg gebildet oder ist zumindest auf einem Längenabschnitt axial elastisch ausgeführt.

Anhand der folgenden Figurenbeschreibung soll die Erfindung näher erläutert werden.

### Es zeigt. Es zeigt:

- Fig. 1: Federträger mit einem Federteller in einer unteren Endstellung
- Fig. 2: Federträger mit dem Federteller in einer oberen Endstellung

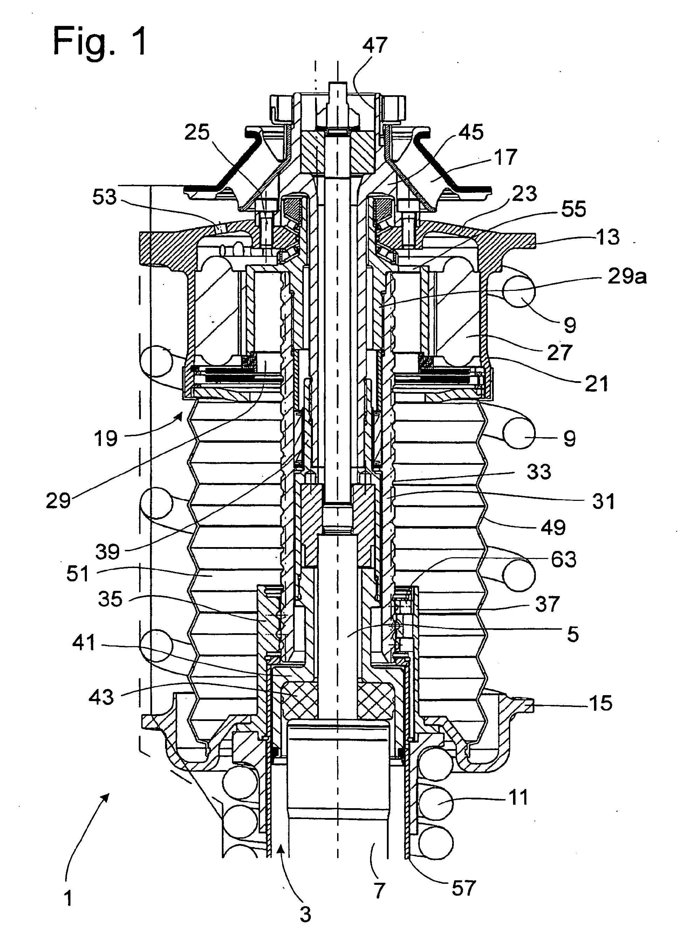

Die Figur 1 zeigt einen oberen Abschnitt eines Federträgers 1, das beispielsweise zwischen einer nichtdargestellten Fahrzeugachse und einem Fahrzeugaufbau angeordnet ist. Ein an sich bekannter Schwingungsdämpfer 3, der eine axial bewegliche Kolbenstange 5 in einem Zylinder 7 umfasst, wird von einer ersten und einer zweiten Tragfeder 9; 11 eingehüllt. Die erste Feder 9 ist zwischen einem ersten Federteller 13 und einem zweiten Federteller 15 verspannt. Die zweite Feder 11 liegt an der Unterseite des zweiten Federtellers 15 und einem nicht dargestellten dritten Federteller an, der optional an dem Zylinder 7 oder einem Achsteil der Fahrzeugachse befestigt ist. Der obere Federteller 13 ist über ein kardanisch bewegliches Kopflager 17 mit dem Fahrzeugaufbau verbunden. An diesem Kopflager ist ebenfalls ein Aktuator 19 in der Bauform eines E-Motors angeschlossen. Der Aktuator umfasst ein Gehäuse 21 mit einem Boden 23, der Befestigungsmittel 25 zum Kopflager aufweist, wobei der obere Federteller 13 mit dem Boden 23 einteilig ausgeführt ist. Aufgrund der gemeinsamen Anbindung des Bodens 23 und der Kolbenstange 5 mit dem Kopflager steht der obere Federteller 13 ortsfest zur Kolbenstange 5.

In dem Gehäuse 21 ist ein ringförmiger Stator 27 angeordnet, der einen Rotor 29 mit einem u-förmigen Querschnitt antreibt. Auf einem axial verlaufenden Schenkel 29a des Rotors 29 ist eine Gewindespindel 31 befestigt, die auf ihrer äußeren Mantelfläche ein Bewegungsgewinde 33 aufweist. In das Bewegungsgewinde 33 greift eine Gewindemutter 35 ein, die über eine Zwischenhülse 37 mit dem zweiten Federteller 15 in Wirkverbindung steht. In Abhängigkeit der Drehbewegung des Rotors und damit der Gewindespindel führt die Gewindemutter eine translatorische axiale Bewegung aus, die von dem zweiten Federteller 15 synchron mit ausgeführt wird, wodurch sich die Gesamttragkraft der beiden Federn 9; 11 einstellen lässt, um z. B. eine Wankbewegung des Fahrzeugaufbaus zu kompensieren.

Ausgehend vom Kopflager 17 erstreckt sich innerhalb der Gewindespindel ein Führungsrohr 39, das an seinem unteren Ende eine Glocke 41 trägt, in der ein Anschlagpuffer 43 eingespannt ist, der ab einer definierten Hublage des Schwingungsdämpfers 3 auf einer oberen Stirnfläche des Zylinders 7 zur Anlage kommt. Das Führungsrohr ist in Axialrichtung und in Umfangsrichtung ortsfest zur Kolbenstange gelagert, da ein Flansch 45 von den Befestigungsmitteln 25 zum Gehäuse des E-Motors durchdrungen wird und in einer topfförmigen Erweiterung 47 die Kolbenstange befestigt ist.

Die Gewindespindel 31 und die Gewindemutter werden bis zum zweiten Federteller 15 von einem elastischen Schutzrohr in der Ausführung eines Schutzbalgs 49 eingehüllt, der endseitig an der Baueinheit Gewindemutter-Federteller befestigt ist. Das andere Ende des Gehäuses 21 des E-Motors deckt das Schutzrohr endseitig ab. Damit begrenzt das Schutzrohr einen luftgefüllten Ringraum 51. In dem Aktuator 19, nämlich in dem Boden 23 des Gehäuses 21, ist eine Strömungsverbindung 53 ausgeführt, die mit der Umgebung verbunden ist. Funktional zwischen der Strömungsverbindung 53 und dem Ringraum 51 weist der Rotor 29 eine Lüftungsdurchlass 55 auf. Bei einer Relativbewegung des zweiten Federtellers 15 zum ersten Federteller 13 verändert sich das Volumen des Ringraums 51. Diese Volumenänderung kann über den Lüftungsdurchlass 55 im Rotor 29 und der Strömungsverbindung 53 durch Luftaustausch mit der Umgebung kompensiert werden. Die Strömungsverbindung 53 ist durch die Anordnung im oberen Teil des Gehäuses weitestgehend von Schmutzeinflüssen in einem Radkasten geschützt.

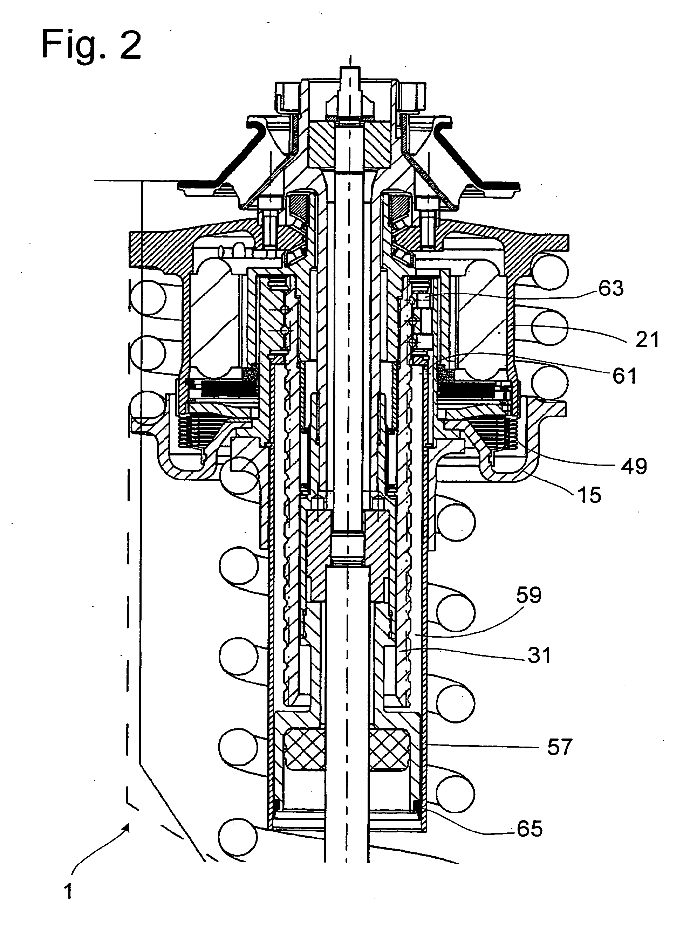

Mit der Gewindemutter 35 ist ein zweites Schutzrohr 57 in der Bauform eines starren Körpers verbunden, das wie insbesondere aus der Fig. 2 ersichtlich ist, mit dem Zylinder 7 des Schwingungsdämpfers 3 einen zweiten Ringraum 59 bildet. Der zweite Ringraum ist über eine Durchlassöffnung 61, die radial in dem zweiten Schutzrohr 57 ausgeführt ist, mit dem ersten Ringraum verbunden. Auch die Gewindemutter 35 ist mit einer Belüftungsanschlussöffnung 63 versehen.

In der Fig. 1 nehmen der zweite Federteller 15 und damit auch die Gewindemutter 35 eine untere Endstellung ein. In dieser Position verfügt der erste Ringraum 51 über das größte Volumen, hingegen ist der zweite Ringraum 59 auf sein Kleinstvolumen komprimiert.

Der zweite Ringraum 59 wird von einer Dichtung 65 zum Schutzrohr 57 verschlossen, wobei die Dichtung 65 an der Glocke 41 befestigt ist, so dass kein Schmutz radseitig in den zweiten Ringraum eindringen kann und insbesondere die Gewindespindel 31 und die Gewindemutter 35 in ihrer Wirkung beeinträchtigt.

Trotz der Verwendung eines Aktuators an einem Schwingungsdämpfer in der Bauform eines Federträgers treten unter keinen Umständen Pumpeffekte auf, die den Schutzbalg 49 belasten oder als eine zusätzliche Federwirkung auftreten könnten.

## Patentansprüche

1. Federträger (1), umfassend einen Schwingungsdämpfer (3) mit einer in einem Zylinder (7) axial beweglichen Kolbenstange (5), zwei voneinander beabstandete Federteller (13; 15), zwischen denen eine Tragfeder (9) angeordnet ist, und einen als ein ersten Schutzrohr verwendeten Faltenbalg (49), welcher mit dem Federteller (15) verbunden ist und nach radial einen Ringraum (51) begrenzt, welcher zusätzlich endseitig abgedeckt ist, wobei zwischen dem Ringraum (51) und der Umgebung des Faltenbalgs (49) mindestens eine Strömungsverbindung (53) zum Luftaustausch vorliegt,
**dadurch gekennzeichnet,**
**dass** der Federträger (1) zur axialen Verstellung des mit dem Faltenbalg (49) verbundenen Federtellers (15) für eine Tragfeder (9; 11) einen Aktuator (19) aufweist, welcher endseitig mit dem Faltenbalg (49) verbunden ist, wobei in dem Aktuator (19) die mindestens eine Strömungsverbindung (53) ausgeführt ist.

2. Federträger nach Anspruch 1,
**dadurch gekennzeichnet,**
**dass** der Aktuator (19) einen Stator (27) und einen Rotor (29) umfasst, wobei sowohl das Gehäuse (21) als auch der Rotor (27) für mindestens eine Strömungsverbindung (53; 55) jeweils einen Lüftungsdurchlass (55) aufweisen.

3. Federträger nach Anspruch 2,
**dadurch gekennzeichnet,**
**dass** der Aktuator (19) über seinen Rotor (29) eine Gewindespindel (31) antreibt, die auf eine Gewindemutter (35) eine Axialbewegung zur Positionierung eines Federtellers (15) für eine Tragfeder (9; 11) ausübt, wobei die Baueinheit Gewindemutter-Federteller mit einer Belüftungsanschlussöffnung (63) an den Ringraum (51) ausgeführt ist.

4. Federträger nach Anspruch 3,
**dadurch gekennzeichnet,**
**dass** die Gewindemutter (35) mit einem zweiten Schutzrohr (57), welches sich in Richtung des Zylinders erstreckt, verbunden ist, wobei das zweite Schutzrohr (57) einen zweiten Ringraum (59) begrenzt, welcher über eine Durchlassöffnung (61) mit dem ersten Ringraum (51) verbunden ist.

5. Federträger nach Anspruch 4,
**dadurch gekennzeichnet,**
**dass** das zweite Schutzrohr (57) als starrer Körper ausgeführt ist.

6. Federträger nach Anspruch 5,
**dadurch gekennzeichnet,**
**dass** der zweite Ringraum (59) von einer Dichtung (65) zwischen dem zweiten Schutzrohr (57) und einer Glocke (41) verschlossen wird.

## Claims

1. Spring carrier (1), comprising a vibration damper (3) with a piston rod (5) movable axially in a cylinder (7), two spring plates (13; 15) which are spaced apart from one another and between which a carrying spring (9) is arranged, and a concertina (49) which is used as a first protective tube and which is connected to the spring plate (15) and delimits radially an annular space (51) which is additionally covered on the end face, at least one flow connection (53) for air exchange being present between the annular space (51) and the surroundings of the concertina (49), **characterized in that** the spring carrier (1) has, for the axial adjustment of the spring plate (15) connected to the concertina (49) and intended for a carrying spring (9; 11), an actuator (19) which is connected on the end face to the concertina (49), the at least one flow connection (53) being formed in the actuator (19).

2. Spring carrier according to Claim 1, **characterized in that** the actuator (19) comprises a stator (27) and a rotor (29), both the housing (21) and the rotor (27) having in each case a ventilation passage (55) for at least one flow connection (53; 55).

3. Spring carrier according to Claim 2, **characterized in that** the actuator (19), via its rotor (29), drives a threaded spindle (31) which exerts upon a threaded nut (35) an axial movement for positioning a spring plate (15) intended for a carrying spring (9; 11), the threaded-nut/spring-plate structural unit being formed with a ventilation connecting orifice (63) to the annular space (51).

4. Spring carrier according to Claim 3, **characterized in that** the threaded nut (35) is connected to a second protective tube (57) which extends in the direction of the cylinder, the second protective tube (57) delimiting a second annular space (59) which is connected to the first annular space (51) via a passage orifice (61).

5. Spring carrier according to Claim 4, **characterized in that** the second protective tube (57) is designed as a rigid body.

6. Spring carrier according to Claim 5, **characterized in that** the second annular space (59) is closed by a seal (65) between the second protective tube (57) and a bell (41).

## Revendications

1. Support à ressort (1) comprenant un amortisseur de vibrations (3) avec une tige de piston (5) déplaçable axialement dans un cylindre (7), deux coupelles de ressort (13 ; 15) espacées l'un de l'autre, entre lesquelles est disposé un ressort porteur (9), et un soufflet (49) utilisé comme premier tube de protection, qui est connecté à la coupelle de ressort (15) et qui limite radialement un espace annulaire (51) qui est recouvert en outre du côté de l'extrémité, au moins une connexion d'écoulement (53) pour l'échange d'air étant prévue entre l'espace annulaire (51) et l'environnement du soufflet (49),
**caractérisé en ce que**
le support à ressort (1) pour le réglage axial de la coupelle de ressort (15) connectée au soufflet (49), présente un actionneur (19) pour un ressort porteur (9 ; 11), qui est connecté à l'extrémité au soufflet (49), l'au moins une connexion d'écoulement (53) étant réalisée dans l'actionneur (19).

2. Support à ressort selon la revendication 1,
**caractérisé en ce que**
l'actionneur (19) comprend un stator (27) et un rotor (29), le boîtier (21) ainsi que le rotor (27) présentant à chaque fois un passage de ventilation (55) pour au moins une connexion d'écoulement (53 ; 55).

3. Support à ressort selon la revendication 2,
**caractérisé en ce que**
l'actionneur (19) entraîne une broche filetée (31) par le biais de son rotor (29), laquelle exerce sur un écrou fileté (35) un mouvement axial pour le positionnement d'une coupelle de ressort (15) pour un ressort porteur (9 ; 11), l'unité constructive formée de l'écrou fileté et de la coupelle de ressort étant réalisée avec une ouverture de raccordement de ventilation (63) au niveau de l'espace annulaire (51).

4. Support à ressort selon la revendication 3,
**caractérisé en ce que**
l'écrou fileté (35) est connecté à un deuxième tube de protection (57), qui s'étend dans la direction du cylindre, le deuxième tube de protection (57) limitant un deuxième espace annulaire (59), qui est connecté au premier espace annulaire (51) par le biais d'une ouverture de passage (61).

5. Support à ressort selon la revendication 4,
**caractérisé en ce que**
le deuxième tube de protection (57) est réalisé sous forme de corps rigide.

6. Support à ressort selon la revendication 5,
**caractérisé en ce que**
le deuxième espace annulaire (59) est fermé par une garniture d'étanchéité (65) entre le deuxième tube de protection (57) et une cloche (41).
